# FASCICULE DE BREVET EUROPEEN

(11) **EP 1 678 435 B1**
(45) Date de publication et mention de la délivrance du brevet: **22.06.2011**
(21) Numéro de dépôt: 04791550.9
(22) Date de dépôt: 15.10.2004
(51) Int. Cl.: F16L 1/26, E21B 43/01, E21B 17/01

(54) **TUBE DE GUIDAGE POUR CONDUITE FLEXIBLE DE TRANSPORT DES HYDROCARBURES**
FÜHRUNGSROHR FÜR EINEN FLEXIBLEN KANAL ZUM TRANSPORT VON KOHLENWASSERSTOFFEN
GUIDE TUBE FOR A FLEXIBLE DUCT FOR TRANSPORTING HYDROCARBONS

(30) Priorité: 17.10.2003 FR 0312163
(43) Date de publication de la demande: 12.07.2006
(73) Titulaire: Technip France, 92400 Courbevoie (FR)
(72) Inventeur: PERREAU-SAUSSINE, Dominique, CEP-2041-180 Rio de Janeiro, RJ (BR); XAVIER, Gaspar Rua Hadock Lobo 300 Apto 106 BL 2, CEP-20260-133 Rio de Janeiro, RJ (BR)
(74) Mandataire: Bertrand, Didier
(86) Numéro de dépôt international: PCT/FR2004/002639
(87) Numéro de publication internationale: WO 2005/038326

(56) Documents cités:
- EP-A- 0 296 137
- DE-A1- 2 151 506
- GB-A- 2 375 381
- US-A- 4 228 857
- US-A- 4 519 726
- US-A- 4 688 966
- US-A- 5 947 642
- US-A1- 2002 079 693
- US-A1- 2005 082 056

## Description

La présente invention se rapporte à un tube de guidage pour une conduite flexible de transport des hydrocarbures, plus communément appelé tube-guide.

La présente invention est destinée à l'exploitation pétrolière « offshore » et plus particulièrement aux installations marines de surface auxquelles lesdites conduites flexibles sont adaptées à être raccordées. Ces conduites flexibles sont du type de celles qui sont décrites dans les spécifications 17 J et 17 B de l' «American Petroleum Institute » (API).

Des tubes de guidage connus, dénommés « en J » et montés verticalement sur une structure support flottante ancrée, par exemple une plate-forme pétrolière, permettent déjà de guider et de protéger les conduites flexibles dont une extrémité est tirée à bord de la plate-forme pour y être raccordée.

Ledit tube de guidage comprend un élément tubulaire inférieur qui généralement est immergé et qui présente une portion sensiblement rectiligne laquelle s'étend selon un axe et qui est prolongée par une portion libre présentant une courbure. Cette portion libre présente une paroi interne intérieure à la courbure contre laquelle ladite conduite flexible est adaptée à être entraînée en frottement lorsqu'elle est entraînée à travers ledit tube de guidage.

Par ailleurs, dans le but de limiter les flexions de la conduite flexible au voisinage de ladite portion libre, ce qui pourrait l'endommager, on procède lors de l'installation de ladite conduite au montage d'un limiteur de courbure. Celui-ci est constitué d'un raidisseur en matériau flexible, par exemple en polyuréthanne, qui est monté de manière fixe sur ladite portion libre et qui forme un manchon entourant la conduite pour en limiter les mouvements en débattement. Un tel limiteur de courbure est décrit notamment dans le document FR 2 689 603.

Un autre mode de mise en oeuvre qui est divulgué dans ce document, consiste, non pas à relier directement le limiteur de courbure à ladite portion libre qui est rigide mais à le relier à un organe tubulaire formant manchon qui est monté solidaire autour de la conduite, et en saillie et à coulissement dans ladite portion libre. De la sorte, malgré les faibles mouvements longitudinaux de la conduite flexible dans le tube de guidage qui provoque le coulissement de l'organe tubulaire dans la portion libre, ce dernier reste solidaire et dans le prolongement de ladite portion libre. Ainsi, l'organe tubulaire est maintenu en débattement et le limiteur de courbure qui le prolonge joue complètement son rôle tout comme dans le mode de réalisation précédant.

En revanche, alors que dans la méthode d'installation du mode de réalisation précédent, la conduite flexible était susceptible d'être entraînée longitudinalement en frottement dans le limiteur de courbure, pour ce dernier mode cela ne se produit pas, puisque le raidisseur est monté de manière fixe sur la conduite flexible en longueur courante.

Néanmoins, dans les deux modes de réalisation, la conduite flexible est susceptible d'être entraînée en frottement contre la paroi interne intérieure à la courbure de ladite portion libre, ce qui risque de l'endommager.

Il est décrit dans le document US 4 519 726 un autre type de limiteur de courbure selon le préambule de la revendication 4, dans lequel la conduite flexible est susceptible d'être entrainée en frottement.

Le document US 4 519 726 décrit en outre une conduite flexible selon le préambule de la revendication 6.

Un problème qui se pose et que vise à résoudre la présente invention, est alors de proposer un tube de guidage qui permette l'entraînement de la conduite flexible dans ledit élément tubulaire inférieur sans pour autant endommager la conduite flexible.

Dans ce but, la présente invention propose un tube de guidage selon la revendication 1 et une conduite flexible selon la revendication 6.

Ainsi, une caractéristique de l'invention réside dans la mise en oeuvre des moyens de guidage excentrés sur la portion rectiligne de l'élément tubulaire qui permettent de maintenir la conduite flexible écartée de l'axe de la portion rectiligne lorsqu'elle est entraînée dans le tube de guidage. De la sorte, la conduite est également écartée de la paroi interne intérieure de la portion libre et ne vient plus frotter contre elle lorsqu'elle est entraînée, ce qui réduit considérablement son usure lors de la procédure d'installation et de désinstallation de la conduite.

Selon un mode de mise en oeuvre les moyens de guidage excentrés comprennent un insert formant bague, ledit insert présentant un périmètre intérieur excentré par rapport au périmètre extérieur. Ainsi, l'espace central de l'insert, délimité par le périmètre intérieur et dont les dimensions sont inférieures à la circonférence de la portion rectiligne, est-il décalé par rapport à l'axe de cette portion vers sa paroi. Bien entendu, l'espace central de l'insert est suffisamment étendu pour permettre le passage de la conduite flexible.

Selon une variante de réalisation lesdits moyens de guidage excentrés sont adaptés à être maintenus en appui contre une collerette que présente ladite portion sensiblement rectiligne. Ainsi, les moyens de guidage excentrés sont parfaitement solidaires en translation de la portion rectiligne de l'élément tubulaire, selon son axe.

Selon cette variante et dans un mode particulier de réalisation, les moyens de guidage excentrés sont adaptés à être maintenus en appui contre ladite collerette par un collier formant bride. De la sorte, les moyens de guidage excentrés sont aisément reliés à la portion rectiligne et y sont maintenus fermement.

De façon à réduire au maximum les forces de frottement sur la conduite flexible, lesdits moyens de guidage excentrés sont réalisés en acier et présente une surface à faible coefficient de frottement.

En outre, selon un autre mode de mise en oeuvre de l'invention, le tube de guidage comprend au moins un élément tubulaire supérieur espacé dudit élément tubulaire inférieur, opposé à ladite portion libre et disposé coaxialement par rapport à ladite portion sensiblement rectiligne. Ainsi, on évite d'utiliser un tube de grande longueur mais simplement deux élément tubulaires espacés l'un de l'autre, verticalement, comme on l'expliquera plus en détail dans la suite de la description.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1, est une vue schématique en perspective d'un élément tubulaire selon un mode de réalisation ;
- la Figure 2 est une vue schématique de dessus d'un détail illustré sur la Figure 1 ;
- la Figure 3 est une vue schématique en coupe verticale de l'invention illustrée sur la Figure 1 selon une première étape d'utilisation ;
- la Figure 4 est une vue schématique en coupe verticale de l'invention illustrée sur la Figure 1 selon une seconde étape d'utilisation ; et,
- les Figures 5 et 6 illustrent l'invention selon un autre objet.

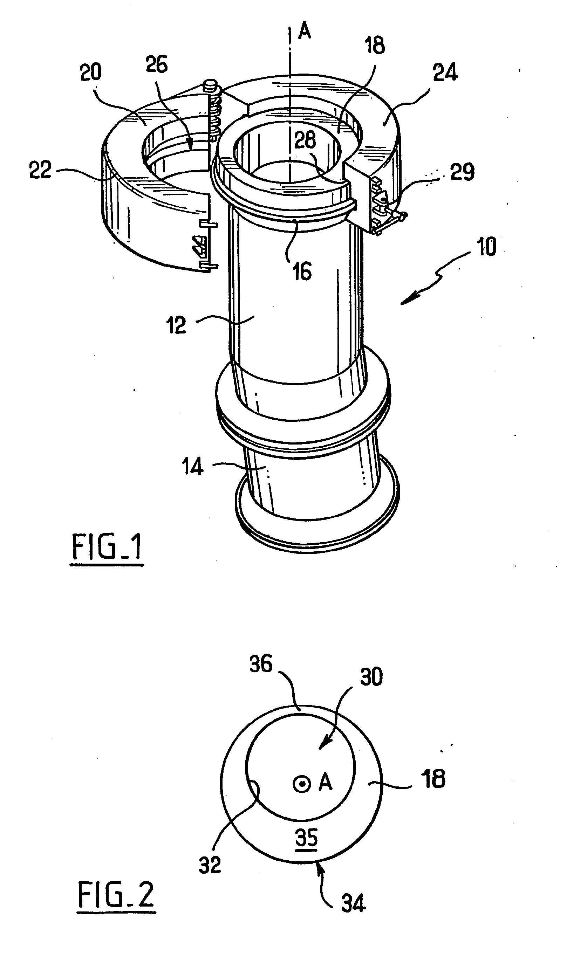

La Figure 1 illustre un élément tubulaire inférieur 10 d'un tube de guidage et qui présente une portion rectiligne 12 qui s'étend selon un axe de symétrie A, cette portion rectiligne 12 étant prolongée par une portion libre 14 incurvée selon une certaine courbure.

Par ailleurs, cette Figure 1 montre un bord évasé 16 qui surmonte la portion rectiligne 12 en formant une collerette et en ménageant un espace sensiblement tronconique. Cet espace tronconique permet de loger une bague excentrée 18 qui présente est elle-même une portion tronconique pour s'insérer parfaitement dans ledit espace. Elle est réalisée par exemple en acier recouvert d'une matière organique apte à la protéger et à diminuer le coefficient de frottement de sa surface.

Ainsi, la bague excentrée 18 est bloquée en translation et ne peut plus être enfoncée plus encore à l'intérieur de la portion rectiligne 12.

En revanche, afin de la bloquer complètement en translation par rapport à la portion rectiligne 12, la bague excentrée 18 est maintenue par un collier 20 démontable formant bride, constitué de deux demi-parties 22, 24 articulées ensemble.

Les demi-parties 22, 24 présentent une section en U définissant deux épaulements, 26, 28 en regard l'un de l'autre, l'un 26 étant adapté à prendre appui en arrière du bord évasé 16 et l'autre 28 étant adapté à prendre appui contre le bord de la bague excentrée 18 pour la bloquer dans l'espace tronconique.

Bien entendu, le blocage de la bague excentrée 18 est conditionnée au rabattement des deux demi-parties 22, 24 l'une vers l'autre et à leur verrouillage grâce à des moyens de fermeture 29. Ainsi qu'on l'expliquera ci-après, le verrouillage doit être suffisant pour bloquer également en rotation la bague excentrée 18 par rapport à la portion rectiligne 12.

Sur la Figure 2 on a représenté la bague excentrée 18 en vue de dessus ainsi que la position de l'axe A de la portion cylindrique 12 qui n'est ici pas représentée. Ainsi, l'espace intérieur 30 de la bague excentrée 18 délimité par sa circonférence intérieure 32 est excentré par rapport à sa circonférence extérieur 34 qui elle est adaptée à coïncider avec le bord évasé 16 de la portion rectiligne 12, de sorte qu'elle présente un bord épais 35 opposé à un bord mince 36.

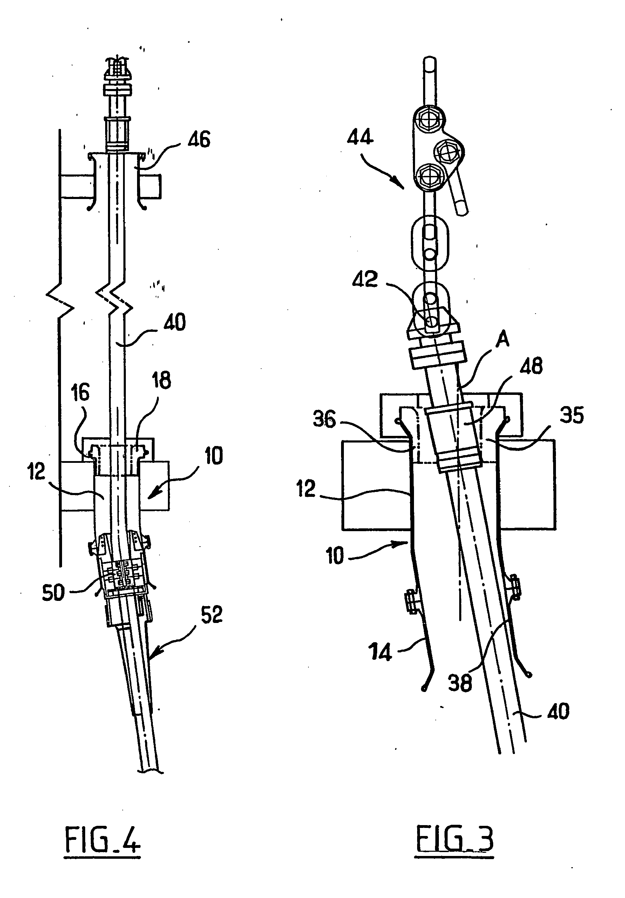

Sur la Figure 3 on retrouve en coupe, l'élément tubulaire 10 présentant sa portion rectiligne 12 et sa portion libre 14 incurvée. Cette portion libre 14 présente une paroi interne 38 intérieure à la courbure. On notera, et c'est là une caractéristique de l'invention, que le bord mince 36 de la bague excentrée 18 est orienté dans une direction opposée à la courbure par rapport à l'axe de symétrie A de la portion rectiligne et par

Voie de conséquence, que le bord épais 35 est orienté vers la courbure. Compte tenu de cela, on comprend désormais pourquoi il est nécessaire que la bague excentrée 18 soit solidaire en rotation de la portion rectiligne 12, puisqu'elle doit impérativement conserver cette position.

Ainsi, le bord épais 35 qui forme une butée décalée vers l'axe de symétrie A, constitue les moyens de guidage excentrés.

On a représenté également sur cette Figure 3 une conduite flexible 40 dont l'extrémité 42 est entraînée verticalement par une ligne 44 à travers l'élément tubulaire 10 afin d'être connectée au niveau d'un élément tubulaire supérieur 46, illustré lui, sur la Figure 4 et que l'on décrira ensuite.

Sur la Figure 3, on remarque que l'extrémité 42 de la conduite flexible 40 et plus précisément un raccord 48 est en appui contre le bord épais 35 de la bague excentrée 18 et que grâce à ce bord épais 35, durant sa traction, la conduite flexible 40 tendra à être écartée de l'axe de symétrie A, dans une direction opposée à la courbure de façon à écarter la conduite 40 de la paroi interne intérieure 38. De la sorte, les frottements de la conduite flexible 40 contre la paroi interne intérieure 38 sont, à tout du moins réduits, et au mieux évités, ce qui permet de préserver la conduite flexible 40 de l'usure.

On retrouve sur la Figure 4 la conduite 40 étendue dans un tube de guidage comprenant l'élément tubulaire inférieur 10 et l'élément tubulaire supérieur 46 maintenus espacés l'un de l'autre. On retrouve également la bague excentrée 18 insérée dans le bord évasé 16 de la portion rectiligne 12.

En outre, selon ce mode de mise en oeuvre particulier, la conduite flexible est entourée d'un manchon 50 dont elle est solidaire, encastré dans la portion libre et prolongé par un limiteur de courbure.

Dans ce mode de mise en oeuvre, la courbure de la portion libre est faible de sorte que la conduite flexible 40 est libre par rapport à sa paroi interne intérieure et également par rapport à la bague excentrée 18. En revanche, avec une portion libre plus incurvée, la conduite flexible serait en appui contre le bord épais de la bague excentrée, ce qui limiterait ainsi, les forces d'appui de la conduite sur la paroi interne intérieure et donc les forces de frottement. De la sorte, la conduite flexible serait moins endommagée par les déplacements relatifs éventuels de la conduite par rapport à la portion libre.

un autre exemple propose des moyens de guidage radiaux d'une conduite flexible à l'intérieur d'un élément tubulaire.

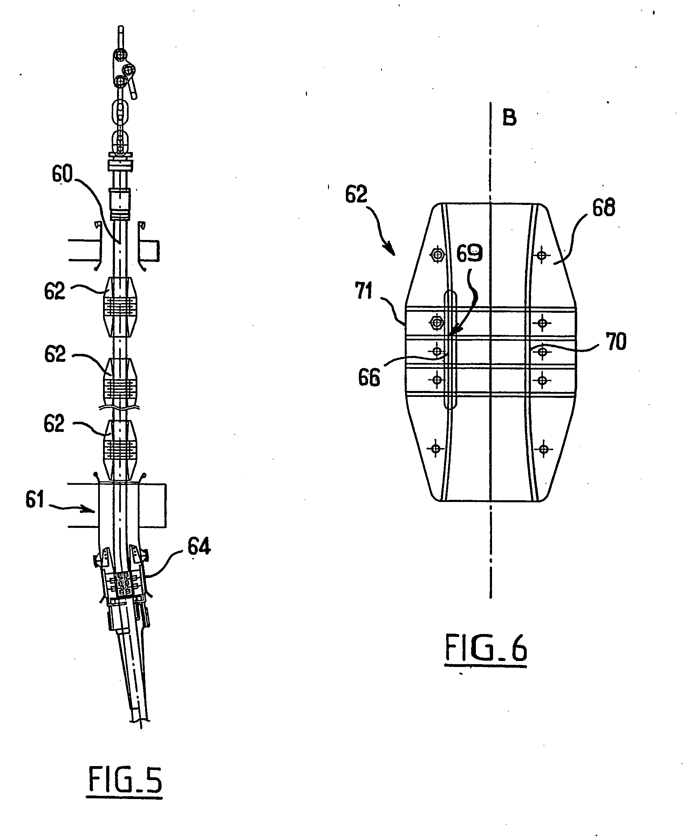

On a représenté sur la Figure 5 une conduite flexible 60 étendue entièrement dans un tube de guidage de façon analogue à la représentation de la Figure 4 et traversant un élément tubulaire inférieur 61 qui lui ne présente pas de bague excentrique. En revanche, ici, la conduite est munie de manchons bi-coniques 62 entourant complètement la conduite 60 et maintenus en position fixe par rapport à elle et espacés les uns des autres.

Ces manchons bi-coniques 62 que l'on décrira ci-après, sont adaptés à guider radialement la conduite flexible 60 notamment dans l'élément tubulaire 61 lorsqu'elle y est entraînée longitudinalement pour être connectée.

Les manchons bi-coniques 62 présente une section radiale correspondant à la section interne de l'élément tubulaire inférieur de façon, d'une part à coulisser librement dans ledit élément tubulaire et d'autre part à maintenir la conduite flexible à distance de la paroi interne de l'élément tubulaire inférieur 61 et en particulier de la paroi interne intérieure de sa portion libre 64. Ainsi, la conduite flexible est préservée des frottements et donc de l'usure.

Sur la Figure 6 on a représenté un manchon bi-coniques, comprenant un collier central 66 de serrage monté sur un organe tubulaire 68 s'étendant symétriquement de part et d'autre dudit collier central 66 selon un axe de symétrie B. Le collier central 66 enserre une partie médiane 70 de l'organe tubulaire 68 qui elle-même présente une surface interne 69 en contact avec la conduite flexible et une surface externe 71. L'organe tubulaire 68 se prolonge à partir de la partie médiane 70, d'une part de façon que la surface interne 69 s'évase pour s'écarter de l'axe de symétrie B et d'autre part, de façon que sa surface externe 71 converge vers l'axe de symétrie B.

Ainsi, grâce à la surface interne 69 évasée la conduite flexible est adaptée à être fléchie sensiblement ce qui permet de diminuer la raideur moyenne de la conduite. Par ailleurs, la surface externe 71 est adaptée pour faire coulisser plus aisément les manchons bi-coniques dans les éléments tubulaires.

Selon un mode de réalisation particulier de l'invention non représenté, on utilise à la fois des manchons bi-coniques de guidage de la conduite flexible dans l'élément tubulaire inférieur et des moyens de guidage excentrés constitués d'une bague excentrée. Cette bague excentrée est montée sur l'élément tubulaire inférieur de façon analogue au premier objet de l'invention, toutefois la section des manchons biconiques est ici inférieure ou sensiblement équivalente à la section interne définie par la bague excentrée et non plus par la section interne de l'élément tubulaire de façon à pouvoir la traverser librement.

En outre selon une caractéristique particulière, les manchons biconiques sont espacés le long de la conduite flexible d'une distance inférieure à la longueur total de l'élément tubulaire inférieur de façon que la conduite flexible soit toujours guidée radialement par au moins un manchon bi-conique coulissant dans l'élément tubulaire inférieur lorsqu'elle y est entraînée.

## Revendications

1. Tube de guidage pour une conduite flexible (40) de transport des hydrocarbures et destiné à être monté sensiblement verticalement sur une installation marine pour permettre de connecter ladite conduite flexible (40) à ladite installation marine, ledit tube de guidage comprenant un élément tubulaire inférieur (10) présentant une portion sensiblement rectiligne (12) qui s'étend selon un axe (A) et qui est prolongée par une portion libre (14) présentant une courbure, ladite portion libre (14) présentant une paroi intern (38) intérieure à la courbure contre laquelle ladite conduite flexible (40) peut être adaptée à être entraînée en frottement lorsqu'elle est entraînée à travers ledit tube de guidage, et ladite portion rectiligne (12) comprenant des moyens de guidage excentrés (18) adaptés à guider ladite conduite flexible (40) pour la maintenir écartée dudit axe (A) dans une direction opposée à ladite courbure de façon à écarter ladite conduite (40) de ladite paroi interne intérieure (38) ;
**caractérisé en ce que** lesdits moyens de guidage excentrés (18) comprennent un insert formant bague, ledit insert présentant un périmètre intérieur excentré par rapport au périmètre extérieur.

2. Tube de guidage selon la revendication 1, **caractérisé en ce que** ladite portion sensiblement rectiligne (12) présente une collerette contre laquelle lesdits moyens de guidage excentrés (18) sont adaptés à être maintenus en appui.

3. Tube de guidage selon la revendication 2, **caractérisé en ce que** lesdits moyens de guidage excentrés (18) sont adaptés à être maintenus en appui contre ladite collerette par un collier (20) formant bride.

4. Tube de guidage selon l'une quelconque des revendications 1 à 3, **caractérisé en ce que** lesdits moyens de guidage excentrés (18) sont réalisés en acier et présente une surface à faible coefficient de frottement.

5. Tube de guidage selon l'une quelconque des revendications 1 à 4, **caractérisé en ce qu'**il comprend en outre au moins un élément tubulaire supérieur (46) espacé dudit élément tubulaire inférieur (10), opposé à ladite portion libre (14) et disposé coaxialement par rapport à ladite portion sensiblement rectiligne (12).

6. Conduite flexible de transport des hydrocarbures destinée à être entraînée dans un tube de guidage selon l'une quelconque des revendications 1 à 5, **caractérisée en ce qu'**elle comprend des manchons biconiques destinés à guider radialement ladite conduite flexible lorsqu'elle est entraînée longitudinalement à travers ledit élément tubulaire inférieur.

7. Conduite flexible selon la revendication 6, **caractérisée en ce que** lesdits manchons biconiques sont espacés le long de ladite conduite flexible d'une distance inférieur à la longueur dudit élément tubulaire.

## Claims

1. A guide tube for a flexible pipe (40) for transporting hydrocarbons and designed for mounting substantially vertically on an offshore installation to allow connection of said flexible pipe (40) to said offshore installation, said guide tube comprising a lower tubular element (10) having a substantially rectilinear section (12) extending along an axis (A) and extended by a free section (14) having a curvature, said free section (14) having an inner wall (38) internal to the curvature against which said flexible pipe (40) can be fitted so as to be entrained in friction when entrained through said guide tube, and said rectilinear section (12) comprising eccentric guide means (18) for guiding said flexible pipe (40) in order to hold it away from said axis (A) in an opposite direction from said curvature so as to keep said pipe (40) away from said internal inner wall (38); **characterized in that** said eccentric guide means (18) comprise an insert forming a ring, said insert having an inner perimeter that is eccentric relative to the outer perimeter.

2. The guide tube as claimed in claim 1, **characterized in that** said substantially rectilinear section (12) has a flange against which said eccentric guide means (18) fit in order to be held in a bearing relationship.

3. The guide tube as claimed in claim 2, **characterized in that** said eccentric guide means (18) are adapted so as to be held in a bearing relationship against said flange by a collar (20) forming a clamp.

4. The guide tube as claimed in any one of claims 1 to 3, **characterized in that** said eccentric guide means (18) are made from steel and have a surface with a low friction coefficient.

5. The guide tube as claimed in any one of claims 1 to 4, **characterized in that** it also comprises at least one upper tubular element (46) spaced from said lower tubular element (10), opposite said free section (14) and arranged coaxially relative to said substantially rectilinear section (12).

6. A flexible pipe for transporting hydrocarbons designed to be entrained in a guide tube as claimed in any one of claims 1 to 5, **characterized in that** it comprises biconical sleeves designed to guide radially said flexible pipe when entrained longitudinally through said lower tubular element.

7. The flexible pipe as claimed in claim 6, **characterized in that** said biconical sleeves are spaced along said flexible pipe by a distance shorter than the length of said tubular element.

## Patentansprüche

1. Führungsrohr für eine biegsame Rohrleitung (40) für den Transport von Kohlenwasserstoffen und vorgesehen für die im Wesentlichen vertikale Montage an einer Offshore-Anlage, um den Anschluss der biegsamen Rohrleitung (40) an die Offshore-Anlage zu ermöglichen, wobei das Führungsrohr ein unteres röhrenförmiges Element (10) enthält, das einen im wesentlichen geradlinigen Abschnitt (12) aufweist, der sich entlang einer Achse (A) erstreckt und sich über einen freien Abschnitt (14) fortsetzt, der eine Krümmung aufweist, wobei der freie Abschnitt (14) eine innere Wandung (38) innerhalb der Krümmung aufweist, gegen welche die biegsame Rohrleitung (40) angepasst werden kann, um unter Reibung angetrieben zu werden, wenn sie durch das Führungsrohr hindurch angetrieben wird, und wobei der geradlinige Abschnitt (12) exzentrische Führungsmittel (18) enthält, die dafür geeignet sind, die biegsame Rohrleitung (40) zu führen, um sie von der Achse (A) in einer zu der Krümmung entgegengesetzten Richtung beabstandet zu halten, derart, dass die Rohrleitung (40) von der innen liegenden inneren Wandung (38) abgespreizt wird; **dadurch gekennzeichnet, dass** die exzentrischen Führungsmittel (18) einen Einsatz enthalten, der einen Ring bildet, wobei der Einsatz einen in Bezug auf den Außenumfang exzentrischen Innenumfang aufweist.

2. Führungsrohr nach Anspruch 1, **dadurch gekennzeichnet, dass** der im Wesentlichen geradlinige Abschnitt (12) einen Bund aufweist, gegen den die exzentrischen Führungsmittel (18) in Abstützung haltbar sind.

3. Führungsrohr nach Anspruch 2, **dadurch gekennzeichnet, dass** die exzentrischen Führungsmittel (18) dafür geeignet sind, durch eine Schelle (20), die einen Flansch bildet, in Abstützung gegen den Bund gehalten zu werden.

4. Führungsrohr nach einem der Ansprüche 1 bis 3, **dadurch gekennzeichnet, dass** die exzentrischen Führungsmittel (18) aus Stahl ausgebildet sind und eine Oberfläche mit niedrigem Reibungskoeffizienten ausweisen.

5. Führungsrohr nach einem der Ansprüche 1 bis 4, **dadurch gekennzeichnet, dass** es ferner zumindest ein oberes röhrenförmiges Element (46) enthält, das von dem unteren röhrenförmigen Element (10) beabstandet ist, dem freien Abschnitt (14) gegenüberliegt und in Bezug zu dem im Wesentlichen geradlinigen Abschnitt (12) koaxial angeordnet ist.

6. Biegsame Rohrleitung für den Transport von Kohlenwasserstoffen, dafür vorgesehen, in einem Führungsrohr nach einem der Ansprüche 1 bis 5 angetrieben zu werden, **dadurch gekennzeichnet, dass** sie zweiseitig konische Hülsen enthält, die dafür vorgesehen sind, die biegsame Rohrleitung in radialer Richtung zu führen, wenn sie durch das untere röhrenförmige Element hindurch in Längsrichtung angetrieben wird.

7. Biegsame Rohrleitung nach Anspruch 6, **dadurch gekennzeichnet, dass** die zweiseitig konischen Hülsen entlang der biegsamen Rohrleitung um einen Abstand beabstandet sind, der kleiner als die Länge des röhrenförmigen Elements ist.
